# EUROPEAN PATENT APPLICATION

(11) **EP 3 476 921 A1**
(43) Date of publication of application: **01.05.2019**
(21) Application number: 17820427.7
(22) Date of filing: 12.06.2017
(51) Int. Cl.: C10L 5/46, C10L 5/36, C10L 5/06, B65G 47/18

(54) **METHOD FOR MANUFACTURING PELLETS USING BIOMASS**

(30) Priority: 27.06.2016 KR 20160080369
(71) Applicant: Ko, Jong Song, Incheon 21421 (KR)
(72) Inventor: Ko, Jong Song, Incheon 21421 (KR)
(74) Representative: Spengler, Robert
(86) International application number: PCT/KR2017/006061
(87) International publication number: WO 2018/004150

(57) **Abstract**

Disclosed is a method of manufacturing biomass pellets. The method includes pulverizing and cutting waste composed of organic matter into smaller waste particles, drying the waste particles, coating primarily the dried waste particles with waste oil, adding sawdust, coal, and coal catalyst to the oil-coated waste particles to produce a primary mixture, adding sludge-type food waste and excrement to the primary mixture to produce a secondary mixture, coating the surface of the secondary mixture with a coating composition including asphalt emulsion, coal powder, and red clay to produce an extrusion raw material, extruding the extrusion raw material through an extrusion die, and cutting the resulting extrudate at a predetermined interval to produce pellets. The pellets produced through the method have good flammability and exothermic property.

## Description

### TECHNICAL FIELD

The present invention relates to a technology for producing pellet-type solid fuel from food waste, general municipal solid waste, or the like. More particularly, the present invention relates to a method of manufacturing biomass pellets, the method, in terms of combustion efficiency, being an improvement over a technology for which the inventor of this invention has been granted a patent in Korea.

### BACKGROUND ART

It is well known that global environmental issues are becoming more serious and the problems related thereto are worsening. Regarding the use of fossil fuels, certified carbon emissions (CERs) are rapidly gaining worldwide attention.

Energy and environmental problems have been issues of concern for some time, but recently, an official response to these problems has been undertaken in the Kyoto Protocol. Since it is anticipated that fossil fuels will be depleted in the near future, securing energy resources and development of clean and renewable energy have become an urgent need.

As a result, governments and companies around the world are taking a more active steps in developing alternative energy and securing resources to reduce green house gas (GHG) emissions globally.

As part of the effort to develop renewable energy resources as well as to secure existing energy resources, obtaining energy from raw biomass, such as general food waste, garbage, human feces, livestock feces, grains, and agricultural byproducts, is considered as one of the solutions to energy and environmental problems.

Biomass is a generic term for organic matter present in the natural world. It is a representative resource that human beings have used for a long time for food, energy, building materials, household goods, etc. However, biomass was not properly valued due to fossil fuels, such as oil, which can be used conveniently and can be used to manufacture various products at low cost.

However, recently, the perception of biomass has changed rapidly, and the lack of ethanol supply, which is extracted from corn or sugar cane and is used as an energy source, is becoming visible. Furthermore, biodiesel, obtained by processing grain seeds or waste cooking oil, is rapidly spreading.

Biomass, on the other hand, has the potential to replace not only renewable energy sources but also petrochemical based products. Some say biomass is the only 'ground resource' to replace 'underground resources', such as oil and coal.

There are many types of raw biomass, such as microorganisms, animals, plants, and byproducts or garbage generated from various human activities. For example, grains, wood (waste wood, logs, etc.), animal feces, human feces, food waste, organic sewage, sludge originating from waste water treatment are representative raw materials of biomass. Of the above types, waste wood can be recycled as fuel. Excrement, such as human feces and/or livestock feces, and food waste are mainly recycled as fertilizer.

Since some types of raw biomass, such as pulp and paper sludge, have a high water content, those types of raw biomass are required to be dehydrated or dried for conversion to a solid fuel. Furthermore, the raw biomass is a highly porous material. Therefore, the raw biomass has a problem that its transportation efficiency is low due to its high volume and it has a low heating value. Therefore, the conversion from raw biomass to a high value-added product, i.e. biomass, is needed.

On the other hand, as a way of using the above types of raw biomass as a heat energy source, carbide baking is well known. In addition to this, there is a method of manufacturing pellets or briquettes. Pellets and briquettes are considered as consolidated fuels that are obtained by dehydrating wood by using an evaporation process so that the pellets and briquettes may have improved water resistance and high combustibility.

However, since conventional wood-based biomass solid fuels neither have a sufficient calorific value as compared with coal or coke nor a sufficient rigidity, those were not able to withstand the environment in a furnace for iron casting or iron making and were destroyed and burned, thereby failing to function as a substitute coke when combusted along with coal and/or coke for iron casting or iron making.

In addition, among many types of raw biomass, there are some types that are not suitable to be used as a fuel due to a high water content or a high porosity compared to woody biomass. Those types of raw biomass include herbaceous biomass (grass, sunflower) and food waste biomass (bean-curd refuse, rice husk). These types of raw biomass are not effectively used for producing a biomass solid fuel. Therefore, an effort to use these types of raw biomass for production of biomass fuel has been made.

To solve this problem, the inventor of the present application has proposed a method of manufacturing pellets using biomass (Korean Patent No. 10-1457402), for which the has been patented has been granted a patent in Korea, and a method and apparatus for manufacturing pellets using biomass (Korean Patent No. 10-1562226), which has also been patented in Korea. These biomass pellets were obtained by mixing food waste, bones, feather, human feces, and livestock feces with wastes, such as waste wood, waste clothes, scrap paper, and waste synthetic resin.

### DISCLOSURE OF THE INVENTION

### TECHNICAL PROBLEM

The present invention is made to improve a conventional technology for which the inventor of the present application has been granted a patent in Korea, and thus an objective of the present invention is to provide biomass pellets having improved combustion efficiency and an increased caloric value.

### TECHNICAL SOLUTION

In order to accomplish the above objective, the present invention provides a method of manufacturing biomass pellets, the method including: a sorting step S10 of sorting collected waste; a cutting step S20 of pulverizing and cutting the remaining waste after the sorting into smaller coarse particles; a drying step S30 of drying the coarse particles; and an extrusion and cutting step SS80. The method further includes a primary coating step S40 of primarily coating dried coarse particles produced through the drying step S30 with waste oil; a primary mixing step S50 of mixing sawdust, coal powder, and coal catalyst with the oil-coated coarse particles, thereby producing a primary mixture; a secondary mixing step S60 of mixing food waste and excrement (human feces and/or livestock feces) with the primary mixture to produce a secondary mixture; and a secondary coating step S70 of coating the secondary mixture by adding a coating composition composed of asphalt emulsion, coal powder, and red clay to the secondary mixture to produce an extrusion molding raw material. Subsequently, the extrusion molding raw material undergoes the extrusion and cutting step S80.

### ADVANTAGEOUS EFFECTS

According to the present invention, pellets having improved energy efficiency compared to existing pellets that were previously invented by the present inventor and for which the present inventor has been granted a Korean patent can be manufactured by a manufacturing method of the present invention disclosed herein. According to the method, raw biomass, such as collected waste, is first dried and then pulverized and cut into smaller particles. The surfaces of the particles are then primarily coated with waste oil. The primarily oil-coated particles are then mixed with sludge-type food waste and excrement (human feces and/or livestock feces) in a secondary mixing process. The resulting mixture of the secondary mixing process is then secondarily coated with waste oil and asphalt emulsion. Consequently, the waste undergoes two times of coating. In addition, coal catalyst is also added to improve combustibility of coal, whereby the present invention has an advantage of producing biomass pellets having high good combustibility and good exothermic characteristics.

In addition, according to the present invention, the primary coating is performed on a dried mixture produced by the primary mixing step, but the secondary coating is performed on a wet mixture produced by the secondary mixing step at which sludge-type food waste and excrement (human feces and/or livestock feces) is added to the dried waste, thereby producing a viscous mixture. Therefore, pellets that are improved in combustibility and exothermic characteristics can be obtained.

### BRIEF DESCRIPTION OF THE DRAWINGS

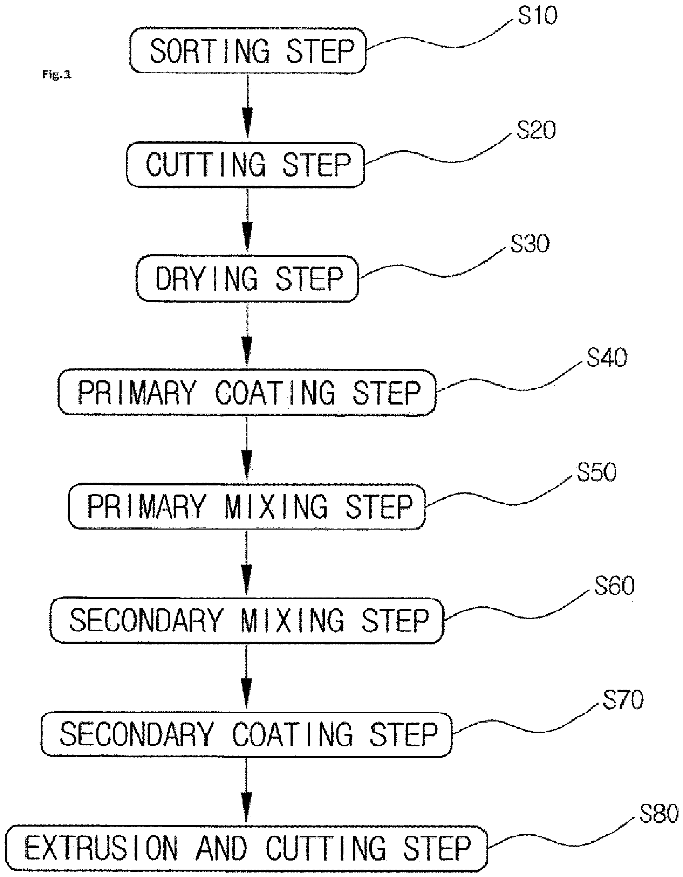

FIG. 1 is a flowchart of a method according to the present invention; and
FIG. 2 is a view schematically illustrating a system according to the present invention.

### MODE FOR CARRYING OUT THE INVENTION

In order to accomplish the above objective, the present invention provides a biomass pellet manufacturing method including:

a sorting step S10 of collecting municipal solid waste originating from human daily activities and mainly composed of food waste, wood waste, and scrap paper and removing iron-based items, plastics, and the like which are not organic matter; a cutting step S20 of pulverizing and cutting the remaining waste into coarse particles; a drying step S30 of drying the resulting particles produced by the cutting step S20 by using a drying furnace, and an extrusion and cutting step S80 of cutting an extrudate being pushed out of an extruder.

The method further includes a primary coating step S40 at which the dried waste particles resulting from the drying step S30 are showered and mixed with waste oil so that the surfaces of the dried particles are coated with the waste oil.

The oil-coated dried particles resulting from the primary coating step S40 subsequently undergo a primary mixing step S50 at which sawdust, coal, and coal catalyst are added to the oil-coated dried particles and then mixed. In the primary mixing step S50, mixing ratios of the sawdust and a mixture of the coal and the coal catalyst are, respectively, 15% by weight and 5% by weight with respect to 100 parts by weight of the dried particles, thereby producing a primary mixture.

The method further includes a secondary mixing step S60 at which 80 parts by weight of sludge-type food waste and 20 parts by weight of excrement composed of human feces and/or livestock feces are added to and mixed with the primary mixture resulting from the primary mixing step S50, in which the mixing ratios of 80 parts by weight and 20 parts by weight are ratios with respect to 100 parts by weight of the primary mixture, thereby obtaining a secondary mixture having a higher viscosity than the primary mixture.

The secondary mixture resulting from the secondary mixing step S60 then undergoes a secondary coating step S70 at which a coating composition composed of 50 parts by weight of asphalt emulsion, 40 parts by weight of coal powder, and 10 parts by weight of red clay is added to and mixed with the secondary mixture, in which the mixing ratios of 50 parts by weight, 40 parts by weight, and 10 parts by weight are ratios with respect to 100 parts by weight of the secondary mixture. Thus, the waste particles are secondarily coated.

The resulting coated mixture obtained through the secondary coating step S70 undergoes the extrusion and cutting step S80 at which an extrudate of the secondary mixture is cut, thereby producing biomass pellets.

### BEST MODE

In the following description, the specific structural or functional descriptions for exemplary embodiments according to the concept of the present invention are merely for illustrative purposes. So, those skilled in the art will appreciate that various modifications and changes to the exemplary embodiments are possible, without departing from the scope and spirit of the present invention. Therefore, not only the exemplary embodiments but also various alternatives, modifications, equivalents, and other embodiments may fall with the spirit and scope of the embodiments as defined by the appended claims. The terms and words used in the specification and claims should not be construed only in a conventional or dictionary sense but should be construed in a sense and concept consistent with the technical idea of the present invention, on the basis that the inventor can properly define the concept of a term to describe its invention in the best way possible. Meanwhile, the exemplary embodiments described in the specification and the configurations illustrated in the drawings are merely examples and do not exhaustively present the technical spirit of the present invention. Accordingly, it should be appreciated that there may be various equivalents and modifications that can replace the exemplary embodiments and the configurations at the time at which the present application is filed.

In addition, unless otherwise defined, all terms including technical and scientific terms used herein have the same meaning as commonly understood by those who are ordinarily skilled in the art to which this invention belongs. It will be further understood that terms, such as those defined in commonly used dictionaries, should be interpreted as having a meaning that is consistent with their meaning in the context of the relevant art and the present disclosure, and will not be interpreted in an idealized or overly formal sense unless expressly so defined herein.

Hereinafter, preferred embodiments of the invention will be described with reference to the accompanying drawings.

The present invention is an improvement over the disclosures of Korean Patent No. 10-1457402 and Korean Patent No. 10-1562226, which were invented by the inventor of this disclosure and for which patents have been granted in Korea, and an objective of the present invention is to obtain pellets having high combustion efficiency and good exothermic characteristics.

In order to achieve the objective, a biomass pellet manufacturing method according to the present invention includes a sorting step S10, a cutting step S20, a drying step S30, a primary coating step S40, a primary mixing step S50, a secondary mixing step S60, a secondary coating step S70, and an extrusion and cutting step S80.

In the sorting step S10, municipal solid waste mainly including food waste, waste wood, and scrap paper, which are items generated from human daily activities, is collected. Among the collected waste items, some items that are not classified as biomass raw materials, such as iron-based items and plastic bags used for containing garbage, are sorted out.

The remaining waste including food waste, waste wood, and scrap paper that are classified as general waste is pulverized and cut into smaller particles in the cutting step S20. The waste particles produced by the cutting step S20 pass a drying furnace so as to be well dried in the drying step S30.

In the drying step S30, the waste particles are dried by a steam dryer.

Next, the dried particles resulting from the drying step S30 undergo the primary coating step S40 at which the surfaces of the dried particles are coated. Specifically, the coating is performed by spraying waste oil to the dried particles and blending them together.

The waste oil used in the primary coating step S40 may be waste fuels discarded from automobiles or ships.

As described above, waste oil is sprayed at high pressure onto the dried particles resulting from the drying step S30 and then the waste oil and the dried particles are mixed. Through this process, the surfaces of the dried particles are coated with the waste oil.

When coating the surfaces of waste particles with waste oil, according to the present invention, a roller is used.

That is, as illustrated in the drawings, a roller 160 is installed at a leading end of a supply conveyor 150 by which the waste particles are transported toward a waste oil storage tank 200 from which waste oil is sprayed. The waste oil is sprayed to the roller 160 through a spray nozzle 210. That is, the waste oil is supplied to the roller 160. When the waste particles pass by the roller 160, the waste oil on the surface of the roller 160 is smeared on the surfaces of the waste particles, so that the waste particles are coated with the waste oil.

When the waste oil is directly sprayed onto the waste particles contained in a primary mixer 300 for coating, the oil may not be well mixed with the waste particles due to the viscosity of the waste particles. Therefore, preferably, the roller is used to coat the waste particles.

The coated waste undergoes the primary mixing step S50 at which sawdust, coal, and a coal catalyst are added to the primarily coated waste particles and are then mixed together.

In the primary mixing step S50, sawdust, coal, and coal catalyst are added in predetermined ratios with respect to the total weight of the dried waste resulting from the drying step S30. The sawdust is added in an amount of 15 parts by weight with respect to 100 parts by weight of the dried waste having passed through the primary coating step S40, and a mixture of coal and coal catalyst is added in an amount of 5 parts by weight with respect to 100 parts by weight of the dried waste.

The coal catalyst is composed of carbon (C), sulfur (S), phosphorous (P), and calcium (Ca), etc. The composition ratios of C and S are respectively 47.2% and 0.02%. P and Ca are respectively present in an amount of 100 mg/kg and an amount of 4,400 mg/kg in the coal catalyst.

Table 1 is a component analysis table for a sample of the coal catalyst used in the invention, in which the analysis was performed by Korea Testing and Research Institute at the inventor's request.

**[Table 1]**

| Sample name: Coal catalyst | | | | |
|---|---|---|---|---|
| Analysis result | | | | |
| Analysis target components | Unit | Sample | Result | Analysis method |
| C | % | | 47.2 | ASTM E1915-13 (applied) |
| S | % | | 0.02 | ASTM E1915-13 (applied) |
| P | mg/kg | | 100 | EPA 3051A, 6010D |
| Ca | mg/kg | | 4400 | EPA 3051A, 6010D |

### (Korea Testing and Research Institute)

The product obtained by mixing the oil-coated waste with the mixture of coal and coal catalyst is referred to as a primary mixture.

The primary mixture is obtained by mixing coal, the coal catalyst, and sawdust, which have a high dryness factor, with the dried and oil-coated waste. Therefore, the degree of dryness of the primary mixture is considerably high.

The primary mixture obtained through the primary mixing step S50 undergoes the secondary mixing step S60 at which sludge-type food waste and excrement (human feces and/or livestock feces) are mixed with the primary mixture.

The sludge-type food waste and excrement used in the secondary mixing step S60 contains water therein. This is to increase a viscosity of the primary mixture having a high dryness. Therefore, the secondary mixture resulting from the secondary mixing step S60 is a viscous mixture.

In the secondary mixing step S60, 80 parts by weight of food waste and 20 parts by weight of excrement (human feces and livestock feces), with respect to 100 parts by weight of the primary mixture, are added to the primary mixture to produce the secondary mixture that is a viscous mixture.

After obtaining the secondary mixture, the secondary mixture undergoes the secondary coating step S70 at which the secondary mixture is coated with a coating composition including asphalt emulsion, coal powder, and red clay.

A mixing ratio of asphalt emulsion, coal powder, and red clay in the coating composition is determined such that the coating composition has a predetermined viscosity.

To this end, the coating composition includes 50 parts by weight of asphalt emulsion, 40 parts by weight of coal powder, and 10 parts by weight of red clay with respect to 100 parts by weight of the secondary mixture. The coating composition is added to and mixed with the secondary mixture.

The coating composition permeates into the secondary mixture to be coated on the surfaces of the food waste, human feces, livestock feces, sawdust, coal, coal catalyst. Due to this secondary coating, pellets having a high ignitability can be obtained.

The coated secondary mixture resulting from the secondary coating step S70 is forced to pass through an extrusion die so as to be extruded at a predetermined pressure. The extrudate extruded from the extrusion die is cut at a predetermined interval, thereby obtaining pellets that are final products of the method of the present invention. This process is referred to as the extrusion and cutting step S80.

Next, a system for manufacturing biomass pellets using the manufacturing method of the present invention is described.

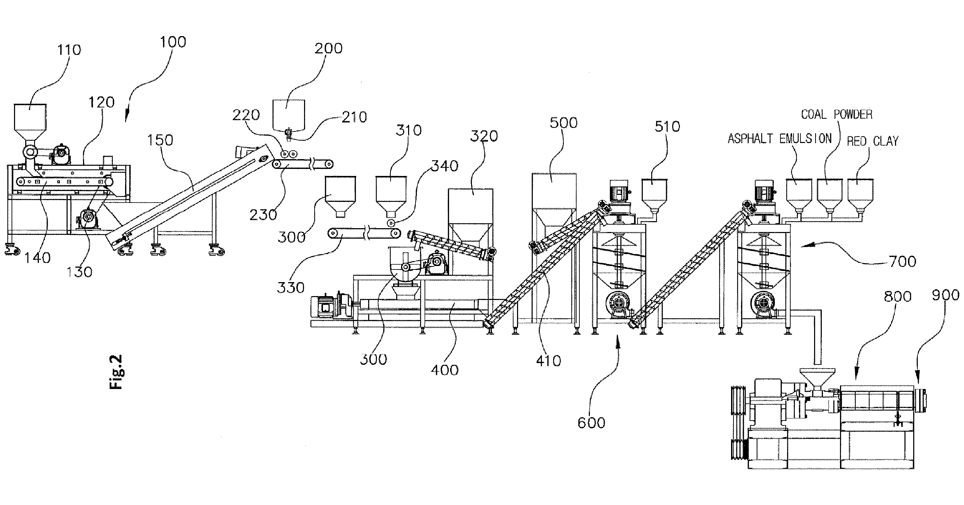

For example, the pellet manufacturing system for producing the biomass pellets using the method described above is implemented by devices shown in FIG. 2. However, other various forms of systems can be used to accomplish the objective of the present invention.

The system includes: a dryer 100; a waste oil storage tank 200 for containing waste oil to be coated on the surface of general waste dried by the drier 100; a primary mixer 300 for containing sawdust, coal, and coal catalyst to be mixed with the general waste coated with the waste oil supplied from the waste oil storage tank 200; a primary extruder 400 for performing extrusion using a primary mixture discharged from the primary mixer; an excrement storage tank 500 for storing human feces and/or livestock feces to be added to the primary mixture extruded through the primary extruder 400; a secondary mixer 600 for mixing the excrement supplied from the excrement storage tank 500 and the primary mixture extruded from the primary extruder; a coater 700 for coating a secondary mixture discharged from the secondary mixer 600 with a coating composition including asphalt emulsion, coal powder, and red clay; a secondary extruder 800 for performing extrusion using the secondary mixture discharged from the secondary coater 700; and a cutter 900 for cutting the extrudate discharged from the secondary extruder 800.

The dryer 100 is a device to dry general waste including food waste, waste wood, and scrap paper generated from human daily activities. Before the general waste is introduced the dryer 100, collected waste undergoes a sorting process in which plastic bags used to contain food waste, etc. are removed.

The sorting corresponds to the sorting step S10 of the manufacturing method of the present invention. A sorting device may be provided in the pellet manufacturing system as a pretreatment device. Alternatively, the pellet manufacturing system may not include the sorting device but may be supplied with waste that has already undergone sorting somewhere else.

Through the sorting process, iron-based items, waste plastic bags, and the like are removed.

The remaining waste from which unnecessary items are sorted out through the pretreatment process (sorting process) has a high water content. Therefore, this waste first needs to be dehydrated.

As illustrated in the drawings, the dryer 100 includes a hopper 110 provided at an upper portion thereof, a chamber 120 connected to a lower end of the hopper 110, and a conveyor 140 provided in the chamber 120 and driven by a motor 130. The drier 100 drops the dried waste at a leading end of the conveyor 140.

The waste oil storage tank 200 is a component for storing waste oil and spraying the waste oil to the dried waste discharged from the dryer 100 to coat the dried waste with waste oil.

According to the present invention, to coat the dried waste with waste oil, a roller coating system is used.

As illustrated in the drawings, the food waste discharged from the dryer 100 and transported by a supply conveyor 150 is dropped to a horizontal conveyor 230 installed under the leading end of the supply conveyor 150. A roller 220 is installed above the horizontal conveyor 230. The waste oil stored in the waste oil storage tank 200 is sprayed to the roller 220 through a spray nozzle 210.

The roller 220 covered with the sprayed waste oil is installed at a position close to the upper surface of the horizontal conveyor 230. When the food waste is transported along the horizontal conveyor 230, the roller 220 comes into contact with the waste, thereby coating the waste with the waste oil.

The process of coating the waste with the waste oil sprayed from the waste oil storage tank corresponds to the primary coating step S40 in the manufacturing method of the present invention.

The term "coating" used in describing the present invention means a process that the surface of waste is coated with waste oil. It is understood that the surface of general waste, for example, the surface of food waste or the surface of waste wood is smeared with waste oil which is sprayed first thereonto and then mixed together.

The waste oil storage tank 200 is equipped with the spray nozzle 210 to spray the waste oil to the primary mixture.

After the surface of the general waste is coated with the waste oil, the coated waste is stored in a storage tank 240.

In addition, a sawdust storage tank 310, which stores sawdust, is provided on the rear side of the storage tank 240. After a predetermined amount of the coated waste is stored in the storage tank 240, the sawdust is supplied from the sawdust storage tank 310 when the coated waste is discharged from the storage tank 240 and then transported by the horizontal conveyor 330. The sawdust is first supplied to a roller 310 and then adhered to the coated waste that is moving along the horizontal conveyor 330.

Since the sawdust is in a dried state, when the viscous waste coated with waste oil passes by the roller 340, the sawdust supplied from the sawdust storage tank 310 is attached to the waste with a viscous surface due to the coating. In this way, sawdust and the waste are mixed.

Next, the general waste which has been mixed with the sawdust supplied from the sawdust storage tank 310 is showered with a mixture of coal powder and coal catalyst supplied from a coal and coal catalyst storage tank 320, and the waste mixed with the coal and coal catalyst is then introduced into the primary mixer 300.

The sawdust is added to the general waste stored in the storage tank 240 in an amount of 15 parts by weight with respect to 100 parts by weight of the general waste stored in the storage tank 240, and the mixture of coal powder and coal catalyst is added in an amount of 5 parts by weight with respect to 100 parts by weight of the general waste stored in the storage tank.

To this end, according to the present invention, while a predetermined amount of oil-coated general waste is being charged into the storage tank 240, the waste oil storage tank 200, the horizontal conveyor 230, the supply conveyor 150, and the dryer 100 temporarily stops operating.

In this state, the horizontal conveyor 330 is driven, and dampers of the storage tank 240, the sawdust storage tank 310, the coal and coal catalyst storage tank 320 are opened. Thus, the sawdust and the mixture of coal powder and coal catalyst are added, with predetermined ratios, respectively, to the oil-coated general waste falling from the storage tank 240. After that, the general waste is introduced into the primary mixer 300.

After a predetermined amount of the general waste is introduced into the first mixer 300, the primary mixture discharged from the primary mixer is supplied to the first extruder 400. At this time, the dryer 100 and the supply conveyor 150 start operating, and the above-described procedure is repeated.

To control the mixing ratios of the sawdust and the mixture of coal powder and coal catalyst, it is preferable to use a timer. The timer may be preliminarily set with a time series manner. However, the settings of the timer may be adjustable.

The primary mixer 300 stores the general waste having passed through the dryer 100 and transported by the supply conveyor 150. Therefore, the primary mixer 300 is a mixing tank in which the general waste, the sawdust, and the mixture of coal powder and coal catalyst are mixed together.

As an alternative to the former way in which the sawdust and the mixture of coal powder and coal catalyst are added in predetermined mixing ratios in a time series manner by using the timer, the addition of the sawdust and the mixture of coal powder and coal catalyst may be made in such a manner that each of the sawdust and the mixture of coal powder and coal catalyst is weighed by a predetermined amount, and then the weighed amounts of the sawdust and the mixture of coal powder and coal catalyst may be introduced into the primary mixer 300 before mixing.

That is, the mixing method may be changed according to given conditions.

After being mixed by the primary mixer 300, the mixture falls to the primary extruder 400 connected to the lower end of the primary mixer 300.

The primary extruder 400 uses a mono-pump for extrusion. Since the primary mixture discharged from the primary mixer 300 is in a dried state. That is, the primary mixture has a low water content. Since the primary mixture is coated with oil, the primary mixture is not a perfectly dried state (non zero water content state). Therefore, it can be extruded by the primary extruder.

In the process in which the primary mixture is extruded by the primary extruder 400, the porosity of the mixture is reduced. In addition, through this process, the oil on the primary mixture may penetrate deep into the mixture. Therefore, the extruded mixture (primary extrudate) has improved combustion efficiency.

The general waste extruded by the primary extruder 400 has a semi-solid form. The semi-solid waste moves upward along the supply conveyor 410 connected to an end of the primary extruder 400, and then moves into the secondary mixer 600 provided at the opposite end of the supply conveyor 410.

The excrement storage tank 500 is provided near the secondary mixer 600, so that excrement (the human feces and/or the livestock feces) stored in the excrement storage tank 500 can be easily supplied to the secondary mixer 600.

Then, sludge-type food waste and the excrement (human feces and livestock feces) are introduced into the secondary mixer 600.

To this end, a food waste storage tank 510 storing sludge-type food waste is connected to the secondary mixer 600.

The sludge-type food waste may be supplied by a screw conveyor as illustrated in the drawings. Alternatively, the sludge-type food waste may be supplied by falling or pumping. The method of supplying the sludge-type food waste to the secondary mixer may be flexibly changed according to workplace conditions or design changes of the system.

The sludge-type food waste and the excrement (human feces and/or livestock feces) contain water. It is added to the dried primary mixture in predetermined mixing ratios.

Preferably, the sludge-type food waste is added in a ratio of 80 parts by weight with respect to 100 parts by weight of the primary mixture and the excrement is added in a ratio of 20 parts by weight with respect to 100 parts by weight of the primary mixture.

The reason of addition of the excrement to the primary mixture is to increase the viscosity of the semi-solid primary mixture which has a very low water content by being mixed with sawdust, coal powder, coal catalyst. The semi-solid primary mixture with a low viscosity, which is discharged from the first extruder 400, cannot be used as an extrusion raw material for obtaining pellets. To solve this problem, the excrement is added to increase the viscosity of the primary mixture.

Herein, the product produced by the secondary mixture 200 is referred to as a secondary mixture.

The secondary mixture has an appropriate water content and has a reduced porosity compared to the primary mixture. That is, the porosity of the primary mixture is reduced while being extruded by the primary extruder. This secondary mixture is then coated secondarily at the secondary coating step S70.

For the secondary coating, the secondary mixture is transported into the coater 700 along a screw conveyor connected to a lower end of the secondary mixer 600. A secondary coating composition storage tank 710 is provided near the secondary coater 700 to supply a coating composition to the secondary coater 700.

The coating composition stored in the secondary coating composition storage tank is a mixture of asphalt emulsion, coal powder, and red clay mixed with an appropriate mixing ratio. Each of the ingredients of the coating composition is added in a predetermined ratio with respect to the weight of the secondary mixture stored in the secondary coating composition storage tank 710.

In the present invention, the appropriate mixing ratio is set such that the asphalt emulsion is added in an amount of 50 parts by weight with respect to 100 parts by weight of the secondary mixture, the coal powder is added in an amount of 40 parts by weight with respect to 100 parts by weight of the secondary mixture, and the red clay is added in an amount of 10 parts by weight with respect to 100 parts by weight of the secondary mixture.

The secondary mixture is coated with the secondary coating composition, which increases combustion efficiency.

The secondary mixture coated by the coater 700 is supplied to the second extruder 800 disposed at a rear end of the screw conveyor.

The second extruder 800 functions to produce final products (i.e., pellets) unlike the first extruder 400. A leading end of the second extruder 800 is equipped with the cutter 900. Therefore, the solid extrudate discharged from the second extruder 800 is cut at an appropriate interval, so that pellets can be produced.

While the present invention has been described with reference to specific exemplary embodiments and the drawings, it is apparent that the present invention is not limited to the disclosed exemplary embodiments, and it will be appreciated by those skilled in the art that various modifications and changes are possible.

Therefore, it will be understood that the technical idea of the present invention should be construed based on the following claims, and all equivalents or equivalent modifications thereof fall within the technical scope of the present invention.

### INDUSTRIAL APPLICABILITY

The present invention is an improvement over the disclosure (invented by the present inventor) of a Korean patent, and proposes a method of manufacturing a pellet-type solid fuel from food waste and general waste rather than disposing the waste in landfills. The pellets manufactured by using the method of the present invention have improved combustion efficiency. Therefore, the present invention is industrially useful.

## Claims

1. A biomass pellet manufacturing method including:
a sorting step (S10) of collecting general waste generated from human daily activities and comprising food waste, waste wood, scrap paper, and many other items, and removing iron-based items and waste plastics from the collected general waste; a cutting step (S20) of pulverizing and cutting the remaining general waste into smaller waste particles; a drying step (S30) of drying the smaller waste particles resulting from the cutting step (S20) ; and an extrusion and
cutting step (S80) of cutting an extrudate, the method is **characterized in** further comprising:
a primary coating step (S40) of coating the dried waste particles resulting from the drying step S30 by spraying waste oil such that surfaces of the dried particles are coated with the waste oil;
a primary mixing step (S50) of mixing sawdust, coal powder, and coal catalyst with the oil-coated dried particles resulting from the primary coating step (S40), in which mixing ratios of the sawdust and a mixture of the coal and the coal catalyst are, respectively, 15 parts by weight and 5 parts by weight with respect to 100 parts by weight of the dried and oil-coated waste particles, thereby producing a primary mixture;
a secondary mixing step (S60) of mixing sludge-type food waste and excrement with the primary mixture, in which mixing ratios of the sludge-type food waste and the excrement are, respectively, 80 parts by weight and 20 parts by weight with respect to 100 parts by weight of the primary mixture, thereby obtaining a secondary mixture;
a secondary coating step (S70) of coating the secondary mixture with a coating composition including 50 parts by weight of asphalt emulsion, 40 parts by weight of coal powder, and 10 parts by weight of red clay with respect to 100 parts by weight of the secondary mixture; and
the extrusion and cutting step (S80) of extruding and cutting an extrudate made from the coated secondary mixture resulting from the secondary coating step S70, thereby producing pellets.
